# FASCICULE DE BREVET EUROPEEN

(11) **EP 2 037 218 B1**
(45) Date de publication et mention de la délivrance du brevet: **15.10.2014**
(21) Numéro de dépôt: 08163181.4
(22) Date de dépôt: 28.08.2008
(51) Int. Cl.: G01C 19/00

(54) **Circuit électronique de mesure d'un paramètre physique fournissant un signal analogique de mesure dépendant de la tension d'alimentation**
Elektronischer Schaltkreis zur Messung eines physischen Parameters, der ein analoges Messsignal liefert, das von der angelegten Spannung abhängt
Electronic circuit for measuring a physical parameter supplying an analogue measurement signal depending on the input voltage

(30) Priorité: 11.09.2007 CH 14312007
(43) Date de publication de la demande: 18.03.2009
(73) Titulaire: EM Microelectronic-Marin SA, 2074 Marin (CH)
(72) Inventeur: Grosjean, Sylvain, 25500, Les Fins (FR); Willemin, Michel, 2515, Prêles (CH); Pfefferli, Beat, 2075, Thielle-Wavre (CH)
(74) Mandataire: Ravenel, Thierry Gérard Louis

(56) Documents cités:
- US-A1- 2005 038 614

## Description

L'invention concerne un circuit électronique de mesure d'un paramètre physique susceptible de fournir un signal de sortie analogique de mesure dépendant de la valeur d'une tension d'alimentation. Pour ce faire, le circuit électronique comprend une interface capteur reliée à un capteur externe de mesure du paramètre physique, un convertisseur analogique-numérique pour convertir numériquement un signal fonction d'un signal de mesure analogique produit par l'interface capteur. Le circuit électronique comprend encore une unité de commande et de traitement des signaux numériques reliée au convertisseur pour fournir un signal de mesure numérique représentatif de la valeur du paramètre physique mesuré par le capteur. Un régulateur de tension, qui est alimenté par une source de tension d'alimentation continue externe, permet d'alimenter à une tension régulée l'interface capteur, le convertisseur et l'unité de commande et de traitement. Ainsi, le signal de mesure analogique de l'interface et le signal de mesure numérique sont indépendants d'une variation du niveau de la tension d'alimentation du circuit électronique.

Lorsque la valeur mesurée du paramètre physique définie dans un signal de mesure analogique ou numérique est dépendant notamment linéairement de la valeur du niveau de la tension d'alimentation d'un circuit électronique de mesure, on parle de ratiométrie ou logométrie. On peut citer à ce titre le document de brevet EP 0 702 207, qui décrit un transducteur ratiométrique pour lequel le signal de mesure analogique fourni en sortie est directement dépendant de la variation de la tension d'alimentation dudit transducteur. Cependant dans un tel transducteur, tous les composants sont alimentés directement par une source de tension d'alimentation, ce qui peut conduire à une forte consommation en énergie électrique, inconvénient notamment dans le cas où la source de tension est une batterie. De plus dans le cas où il est prévu d'intégrer les composants du transducteur dans un circuit intégré, la taille des éléments électroniques de chaque composant ne peut être grandement réduite.

L'invention a donc pour but de fournir un circuit électronique de mesure permettant de recréer facilement la ratiométrie sur le signal de sortie analogique de mesure d'un paramètre physique tout en maintenant la majeure partie des composants du circuit sous une tension régulée. Cette tension régulée est de préférence une basse tension.

A cet effet, l'invention concerne un circuit électronique de mesure, qui comprend les caractéristiques mentionnées dans la revendication indépendante 1.

Des formes d'exécution spécifiques du circuit électronique de mesure sont définies dans les revendications dépendantes 2 à 8.

Un avantage d'un tel circuit électronique de mesure selon l'invention réside dans le fait qu'il permet de recréer la ratiométrie sur un signal de sortie analogique de mesure, afin que ce signal soit dépendant de la valeur du niveau d'une tension d'alimentation du circuit électronique ou de l'unité ratiométrique. Ce signal de sortie analogique est obtenu sur la base d'un signal indépendant de la variation de la tension d'alimentation et produit par un composant alimenté par la tension régulée. Ce signal de sortie analogique est notamment obtenu sur la base du signal de mesure analogique produit par l'interface capteur ou sur la base du signal de mesure numérique produit par l'unité de commande et de traitement des signaux numériques.

Ainsi, la majeure partie des composants du circuit électronique peut fonctionner sous une tension régulée, qui est de préférence une basse tension. Uniquement le régulateur de tension et l'unité ratiométrique sont alimentés directement ou par l'intermédiaire d'un pont résistif par une même ou différente source de tension d'alimentation externe.

Avantageusement le circuit électronique peut être un circuit intégré réalisé dans une technologie basse puissance CMOS inférieure au µm, par exemple à 0.5 µm, 0.18 µm voire inférieure. Ainsi une grande partie des composants du circuit électronique peut être conçue de taille réduite, ce qui permet de réduire la consommation électrique du circuit électronique dans un mode de fonctionnement. Ceci permet également d'avoir dans le circuit électronique intégré toute la gestion des signaux notamment par l'unité de commande et de traitement des signaux numériques, tout en permettant de recréer facilement la ratiométrie du signal de sortie analogique.

Le signal de sortie analogique de mesure peut être avantageusement fourni par un multiplicateur analogique. Ce multiplicateur peut être alimenté directement ou par l'intermédiaire d'un pont résistif à une tension d'alimentation fournie par une même ou différente source de tension d'alimentation du circuit électronique. Le multiplicateur reçoit en entrée le signal de mesure analogique de l'interface capteur, qui peut être filtré. Ce multiplicateur analogique peut comprendre un amplificateur à gain variable, qui fournit le signal de sortie analogique.

Le signal de sortie analogique de mesure peut être avantageusement fourni par un convertisseur numérique-analogique. Ce convertisseur peut être alimenté directement à une tension d'alimentation fournie par une même ou différente source de tension d'alimentation du circuit électronique. Ce convertisseur est commandé par le signal de mesure numérique produit par l'unité de commande et de traitement des signaux numériques.

Les buts, avantages et caractéristiques du circuit électronique de mesure d'un paramètre physique apparaîtront mieux dans la description suivante de formes d'exécution non limitatives illustrées par les dessins sur lesquels :
les figures 1a et 1b représentent de manière simplifiée deux variantes d'une première forme d'exécution d'un circuit électronique de mesure d'un paramètre physique selon l'invention, et
les figures 2a et 2b représentent de manière simplifiée deux variantes d'une seconde forme d'exécution d'un circuit électronique de mesure d'un paramètre physique selon l'invention.

Dans la description suivante, tous les composants du circuit électronique de mesure d'un paramètre physique, qui sont bien connus d'un homme du métier dans ce domaine technique, ne sont décrits que de manière simplifiée.

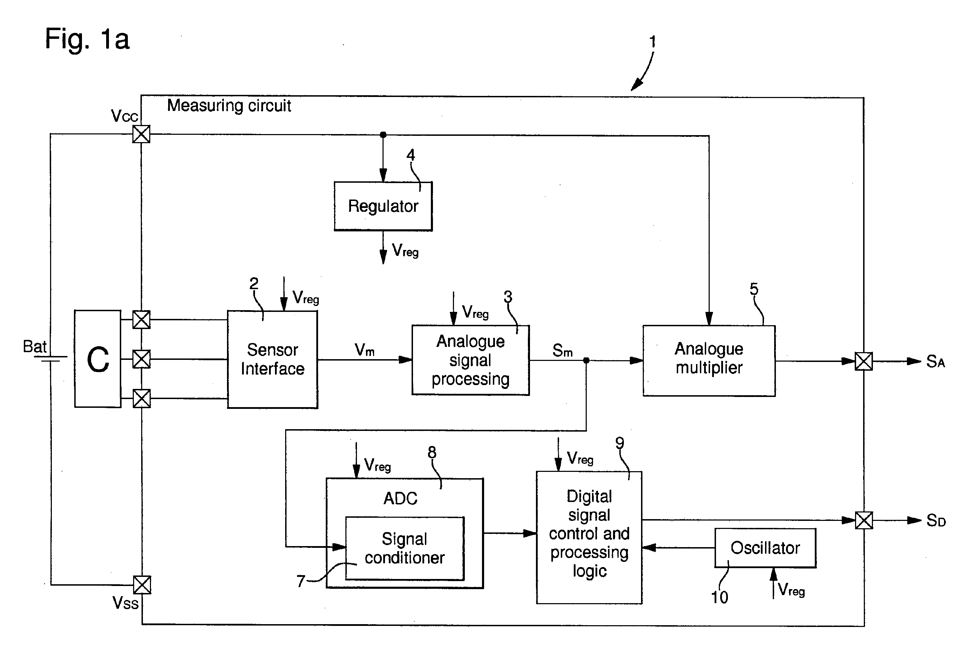

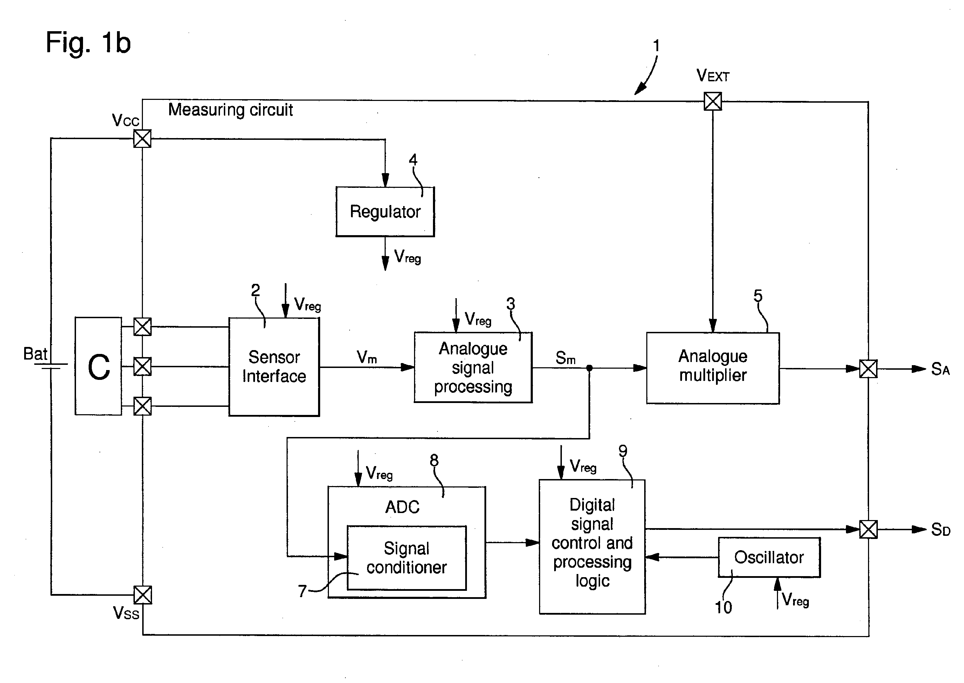

Aux figures 1 a et 1 b, deux variantes d'une première forme d'exécution du circuit électronique 1 de mesure d'un paramètre physique est représentée. Le paramètre physique mesuré peut être par exemple une accélération, une vitesse angulaire, une force ou une pression. Ce paramètre physique peut être mesuré à l'aide d'un capteur C, qui peut être un capteur du type MEMS. Ce capteur est relié au circuit électronique de mesure 1 afin d'être également alimenté notamment par l'intermédiaire dudit circuit électronique.

Cependant dans la suite de la description, il ne sera fait référence qu'à un circuit électronique de mesure 1 relié par exemple à un capteur C du type MEMS pour la mesure d'un paramètre physique, qui peut être une accélération, sans en limiter pour autant l'étendue de la protection. Bien entendu, il peut être prévu un tel circuit électronique de mesure, qui peut être relié à d'autres types de capteurs pour la mesure d'autres paramètres physiques. Le circuit électronique de mesure 1 relié au capteur C peut trouver application par exemple dans le domaine des véhicules routiers, où le circuit électronique 1 peut être alimenté aux bornes V_{CC} et V_{SS} par une source de tension continue Bat, qui peut être une batterie.

Le circuit électronique 1 de mesure du paramètre physique comprend tout d'abord une interface capteur 2. Cette interface capteur est reliée directement au capteur C de manière à fournir en sortie au moins un signal de mesure analogique Vₘ représentatif de la valeur du paramètre physique, notamment l'accélération mesurée par le capteur C.

Le circuit électronique 1 comprend encore une unité de traitement des signaux analogiques 3, un convertisseur analogique-numérique 8, une unité de commande et de traitement des signaux numériques 9, un oscillateur 10, un régulateur de tension régulée 4, et une unité ratiométrique qui est un multiplicateur analogique 5 dans cette première forme d'exécution.

Ce multiplicateur analogique 5 peut être alimenté directement ou par l'intermédiaire d'un pont résistif non représenté par la source de tension continue externe Bat comme représenté à la figure 1a. Ce multiplicateur analogique 5 peut également être alimenté par une tension d'alimentation fournie à une borne V_{EXT} par une autre source de tension continue non représentée comme montré à la figure 1 b. De cette manière, le multiplicateur peut fournir en sortie un signal de sortie analogique de mesure S_{A} sur la base du signal de mesure analogique provenant de l'interface capteur 2.

Ce signal de sortie S_{A} est représentatif de la valeur de l'accélération mesurée par le capteur C et dépendant linéairement également de la variation du niveau de la tension d'alimentation appliquée au multiplicateur analogique 5. Ce signal de sortie S_{A} dépend donc soit de la variation de la tension entre V_{CC} et V_{SS} selon le principe de ratiométrie comme représenté à la figure 1a, soit de la variation d'une tension d'alimentation fournie à la borne V_{EXT} comme représenté à la figure 1 b. Ceci permet de relier directement le circuit électronique de mesure 1 à un composant électronique ou à une chaîne de composants électroniques, qui sont dépendants de la variation du niveau de la tension d'alimentation V_{CC} ou V_{EXT}, tels que des convertisseurs analogiques-numériques.

Le régulateur de tension régulée 4 est relié directement ou par l'intermédiaire d'un pont résistif non représenté à la source de tension continue externe Bat de manière à générer une tension régulée V_{reg} préférentiellement basse tension. La valeur de la tension d'alimentation du circuit électronique de mesure 1 peut être de l'ordre de 5 V, alors que la tension régulée V_{reg} produite par le régulateur de tension peut se situer proche de 1.8 V ou 2 V.

Le régulateur de tension régulée 4 permet d'alimenter en tension régulée V_{reg} la majeure partie des composants électroniques du circuit électronique 1 à l'exception de l'unité ratiométrique, qui est le multiplicateur analogique 5. L'interface capteur 2, l'unité de traitement des signaux analogiques 3, le convertisseur analogique-numérique 8, l'unité de commande et de traitement des signaux numériques 9 et l'oscillateur 10 sont tous alimentés par cette tension régulée V_{reg}. De ce fait, le signal de mesure analogique Vₘ produit par l'interface capteur 2 est indépendant d'une variation du niveau de la tension d'alimentation V_{CC} du circuit électronique 1.

L'interface capteur 2, l'unité de traitement des signaux analogiques 3, le convertisseur analogique-numérique 8, l'unité de commande et de traitement des signaux numériques 9 et l'oscillateur 10 peuvent être intégrés dans un unique circuit intégré réalisé dans une technologie basse puissance CMOS inférieure au µm, par exemple à 0.5 µm, 0.18 µm voire inférieure. De plus comme ils fonctionnent par exemple sous une tension régulée en dessous de 2 V, la taille de ces éléments peut être réduite au minimum. Le multiplicateur 5, ainsi que le régulateur de tension 4 peuvent également être réalisés dans le même circuit intégré en étant alimentés par exemple directement par la source de tension continue externe Bat comme représenté à la figure 1a, ou par une autre source de tension continue à la borne V_{EXT} pour le multiplicateur 5 comme représenté à la figure 1 b.

Le capteur C du type MEMS peut être un capteur capacitif, qui est composé de deux condensateurs montés en différentiel. Une électrode commune des condensateurs est susceptible de se déplacer entre deux électrodes fixes sous l'action par exemple d'une force afin de modifier la valeur capacitive de chaque condensateur. L'interface capteur 2 est donc reliée par trois bornes directement à ce capteur capacitif de manière à fournir en sortie au moins un signal de mesure analogique Vₘ représentatif de la valeur de l'accélération mesurée par le capteur.

L'interface capteur 2 peut être réalisée sur la base d'une interface électronique telle que décrite par exemple dans l'article rédigé par MM. H. Leutold et F. Rudolph, qui est paru dans la revue intitulée "Sensors and actuators" A21-A23 (1990), pages 278 à 281. Cette interface capteur 2 comprend généralement un bloc amplificateur à transfert de charges, qui est relié en entrée à l'électrode commune, un bloc intégrateur pour fournir en permanence en sortie un signal de mesure analogique. Ce signal de mesure analogique est une tension Vₘ égale à l'intégrale des charges fournies par le bloc amplificateur. L'interface capteur 2 comprend encore un bloc d'excitation pour cycliquement polariser de manière connue, dans des phases de polarisation, les électrodes fixes à des niveaux de tension déterminés, par exemple à V_{reg} et à Vss.

Il peut également être prévu de réaliser l'interface capteur 2 sur la base d'une double structure. Cette double structure est composée de deux blocs intégrateurs et de deux blocs d'excitation à fonctionnement alternatif totalement symétrique. Grâce à cela, une compensation d'un écart de tension dû principalement à la technologie utilisée peut être minimisé voire supprimé à l'aide de deux signaux de sortie des intégrateurs. Lors du fonctionnement du circuit électronique, chaque cycle ou période de mesure est donc divisé en quatre phases, dont deux phases successives pour chaque intégrateur.

Une telle interface capteur à double structure peut fournir ainsi deux fois plus de signaux analogiques de mesure chacun sous forme d'une tension de sortie. Une moyenne des deux tensions de sortie fournies par les intégrateurs peut également améliorer le rapport signal sur bruit du circuit électronique.

Dans le cas le plus simple, l'interface capteur 2 fournit donc un signal de mesure analogique Vₘ à une unité de traitement des signaux analogiques 3. Cette unité est utilisée essentiellement pour réaliser un filtrage du signal de mesure analogique Vₘ afin de fournir un signal de mesure filtré Sₘ. Ce filtrage peut être opéré par un unique filtre passe-bas ou par un premier filtre passe-bas suivi par un filtre passe-bas du second ordre programmable bien connu.

Ce signal de mesure analogique filtré Sₘ est fourni directement au multiplicateur analogique 5 de manière à le multiplier par la valeur de la tension d'alimentation V_{CC} ou V_{EXT}, qui est pondérée par un facteur K constant prédéterminé. De cette manière le multiplicateur analogique 5 fournit un signal de sortie analogique de mesure S_{A} qui est linéairement dépendant de la variation du niveau de la tension d'alimentation V_{CC} ou V_{EXT} pour recréer la ratiométrie sur le signal de mesure analogique.

Ce multiplicateur analogique 5 peut comprendre notamment en sortie un amplificateur à gain programmable servant comme mémoire tampon pour adapter l'impédance de sortie du circuit électronique de mesure 1. Cet amplificateur peut recevoir un signal de gain d'un multiplicateur, qui représente par exemple le logarithme naturel de la tension d'alimentation V_{CC} ou V_{EXT} pondérée par un facteur constant prédéterminé K, multipliée par le signal de mesure analogique filtré Sₘ. L'amplificateur permet de fournir en fonction du gain programmé le signal de sortie analogique basé sur le signal de mesure analogique filtré Sₘ multiplié par le gain programmé de l'amplificateur. Avec cet agencement prévu dans le circuit électronique de mesure, il est possible d'avoir un meilleur rapport de réjection de la tension d'alimentation (PSRR pour power supply rejection ratio en terminologie anglaise).

Le signal de mesure analogique filtré Sₘ est fourni également à un convertisseur analogique-numérique ADC 8, dont l'étage d'entrée peut comprendre un conditionneur traditionnel de signaux 7. Ce conditionneur de signaux dans le convertisseur analogique-numérique permet d'adapter le niveau du signal de mesure analogique filtré pour permettre une conversion numérique.

Le convertisseur analogique-numérique 8 fournit un signal numérisé à une unité de commande et de traitement des signaux numériques 9 sur la base du signal de mesure analogique Vₘ provenant de l'interface capteur 2. Cette unité de commande et de traitement 9 permet de générer un signal de mesure numérique S_{D} qui est donc représentatif de la valeur de l'accélération mesurée par le capteur capacitif C. Ce signal de mesure numérique S_{D} peut être fourni à une borne de sortie du circuit électronique de mesure 1. Ce signal de mesure numérique S_{D} est également totalement indépendant des variations du niveau de la tension d'alimentation V_{CC} du circuit électronique 1, car tous les composants ayant servi à produire ce signal de mesure numérique sont alimentés par la tension régulée V_{reg} du régulateur de tension 4.

Toutes les opérations traitées dans l'unité de commande et de traitement 9 sont cadencées par un signal d'horloge fourni par l'oscillateur 10, qui peut être à une fréquence de l'ordre de 1 MHz. Une série de diviseurs dans l'unité de commande et de traitement 9 permet de commander par exemple l'interface capteur 2 pour opérer la commutation de chaque phase par exemple à une fréquence de l'ordre de 100 kHz. L'unité de commande et de traitement 9 peut également comprendre des moyens de mémorisation de données et permettre de commander et configurer les différents composants électroniques du circuit électronique 1.

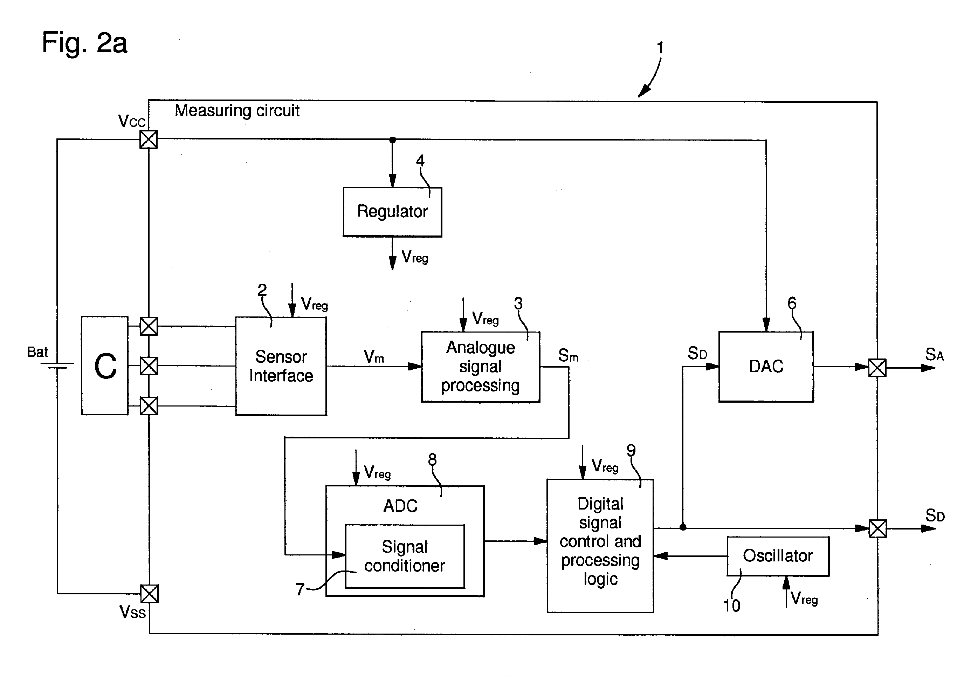

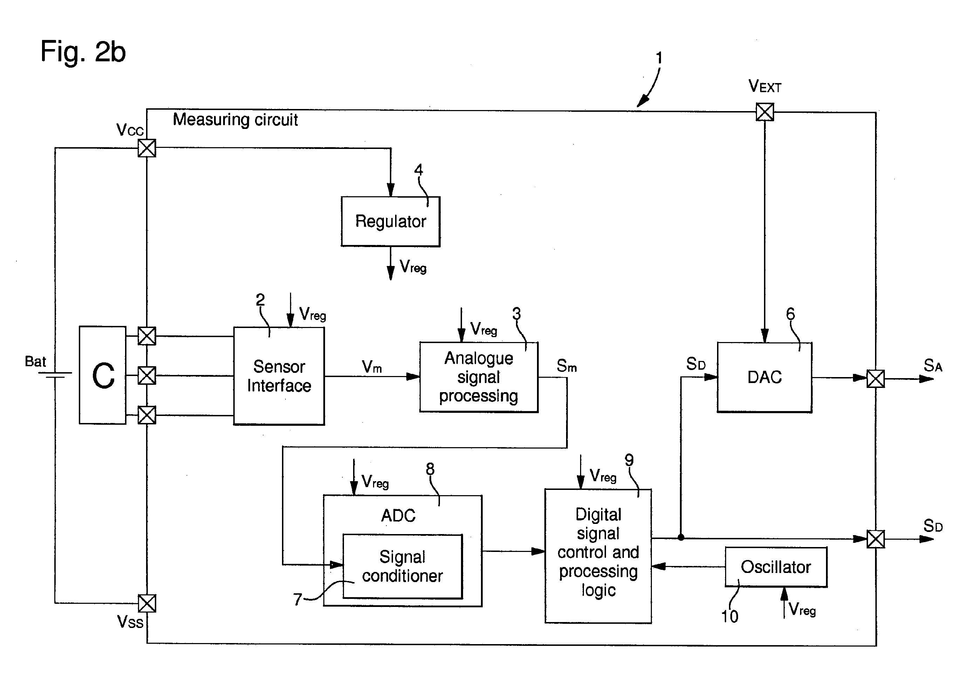

Aux figures 2a et 2b, deux variantes d'une seconde forme d'exécution du circuit électronique 1 de mesure d'un paramètre physique est représentée. Comme précédemment en référence aux figures 1 a et 1 b, le paramètre physique mesuré par le capteur C est une accélération. Cependant, il est bien clair que le paramètre physique mesuré peut également être une vitesse angulaire, une force ou une pression.

Les deux variantes de cette seconde forme d'exécution du circuit électronique 1 diffèrent de celles de la première forme d'exécution uniquement par le fait que c'est le signal de mesure numérique S_{D}, qui est utilisé pour générer le signal de sortie analogique de mesure S_{A}. De ce fait, tous les autres composants du circuit électronique, qui portent les mêmes signes de référence que ceux décrits en référence aux figures 1 a et 1 b, ne seront plus expliqués.

L'unité ratiométrique pour la génération d'un signal de sortie analogique de mesure S_{A} qui puisse tenir compte des variations du niveau de la tension d'alimentation V_{CC} du circuit électronique ou d'une autre tension d'alimentation par une borne V_{EXT}, est dans ce cas un convertisseur numérique-analogique DAC 6. Ce convertisseur DAC 6 peut être relié directement ou par l'intermédiaire d'un pont résistif non représenté aux bornes de la source de tension continue Bat comme représenté à la figure 2a. Ce convertisseur DAC 6 peut être aussi alimenté par une tension d'alimentation fournie à une borne V_{EXT} par une autre source de tension continue non représentée comme montré à la figure 2b. Le niveau de la tension d'alimentation V_{CC} ou V_{EXT} peut varier dans le temps.

Ce convertisseur DAC 6 reçoit directement le signal de mesure numérique S_{D} de l'unité de commande et de traitement 9 pour fournir en sortie le signal de sortie analogique de mesure en ayant recréé facilement la ratiométrie sur ce signal de sortie. Ce convertisseur DAC 6 peut être réalisé, d'une manière connue dans l'état de la technique, par un diviseur résistif relié par exemple entre les deux bornes d'une tension d'alimentation V_{CC} ou V_{EXT} et V_{SS}, et un agencement de transistors MOS reliés à chaque noeud entre les résistances du diviseur. Ces transistors MOS sont commandés sur leur grille sélectivement par le signal numérique afin de court-circuiter certaines résistances dudit diviseur et ainsi fournir un signal de sortie analogique dépendant du niveau de la tension d'alimentation.

A partir de la description qui vient d'être faite, plusieurs variantes de réalisation du circuit électronique de mesure peuvent être conçues par l'homme du métier sans sortir du cadre de l'invention définie par les revendications. Il peut être prévu d'utiliser plusieurs signaux analogiques de mesure produits par l'interface capteur à moyenner afin de recréer la ratiométrie sur ce signal à fournir en sortie du circuit électronique. Le circuit électronique peut comprendre un multiplicateur analogique et un convertisseur numérique-analogique pour fournir deux signaux de sortie analogiques de mesure dépendant du niveau de la tension d'alimentation.

## Revendications

1. Circuit électronique (1) pour la mesure d'un paramètre physique, tel qu'une accélération, une vitesse angulaire, une force ou une pression, le circuit électronique comprenant :
- une interface capteur (2) reliée en entrée à un capteur externe (C) de mesure du paramètre physique, et fournissant en sortie au moins un signal de mesure analogique (Vₘ) représentatif de la valeur du paramètre physique mesuré par le capteur,
- un convertisseur analogique-numérique (8) pour convertir numériquement un signal (Vₘ, Sₘ) fonction du signal de mesure analogique produit par l'interface capteur,
- une unité de commande et de traitement des signaux numériques (9) pour recevoir un signal converti par le convertisseur, et fournir en sortie un signal de mesure numérique (S_{D}) représentatif de la valeur du paramètre physique mesuré par le capteur, et
- un régulateur de tension (4) susceptible d'être alimenté par l'intermédiaire d'une première source de tension d'alimentation continue externe (Bat), le régulateur alimentant à une tension régulée (V_{reg}) l'interface capteur (2), le convertisseur (8) et l'unité de commande et de traitement (9), afin que le signal de mesure analogique de l'interface et le signal de mesure numérique soit indépendant d'une variation du niveau de la tension d'alimentation (V_{CC}) du circuit électronique,
**caractérisé en ce que** le circuit électronique (1) comprend une unité ratiométrique (5, 6) susceptible d'être alimentée par l'intermédiaire de la première source de tension d'alimentation externe (Bat) ou par une seconde source de tension d'alimentation externe (V_{EXT}), pour fournir un signal de sortie analogique de mesure (SA) représentatif de la valeur du paramètre physique mesuré, sur la base du signal de mesure analogique (Vₘ) ou du signal de mesure numérique (S_{D}), et dépendant de la variation du niveau de la tension d'alimentation de la première ou seconde source de tension externe.

2. Circuit électronique (1) selon la revendication 1, **caractérisé en ce que** l'unité ratiométrique comprend un multiplicateur analogique (5) pour multiplier un signal fonction du signal de mesure analogique (Sₘ) produit par l'interface capteur par la valeur de la tension d'alimentation provenant de la première ou seconde source de tension externe (V_{CC}, V_{EXT}) pondérée par un facteur constant prédéterminé, afin de fournir un signal de sortie analogique de mesure dépendant de la variation du niveau de la tension d'alimentation du multiplicateur analogique.

3. Circuit électronique (1) selon la revendication 1, **caractérisé en ce que** l'unité ratiométrique comprend un convertisseur numérique-analogique (6) susceptible d'être alimenté par l'intermédiaire de la première source de tension d'alimentation externe (Bat) ou de la seconde source de tension d'alimentation externe (V_{EXT}), et recevant le signal de mesure numérique (S_{D}) de l'unité de commande et de traitement des signaux numériques (9) pour produire le signal de sortie analogique de mesure dépendant de la variation du niveau de la tension d'alimentation du convertisseur numérique-analogique.

4. Circuit électronique (1) selon l'une des revendications précédentes, **caractérisé en ce qu'**il comprend une unité de traitement des signaux analogiques (3) disposé entre l'interface capteur (2) et le convertisseur analogique-numérique (8) de manière à mettre en forme au moins le signal de mesure analogique produit par l'interface capteur.

5. Circuit électronique (1) selon la revendication 4, **caractérisé en ce que** l'unité de traitement des signaux analogiques comprend au moins un filtre passe-bas pour fournir un signal de mesure analogique filtré (Sₘ).

6. Circuit électronique (1) selon la revendication 5, **caractérisé en ce que** l'unité de traitement des signaux analogiques comprend un premier filtre passe-bas relié directement à l'interface capteur pour filtrer au moins un signal de mesure analogique produit par l'interface capteur, et un second filtre passe-bas programmable du second ordre relié en sortie du premier filtre passe-bas afin de produire au moins un signal de mesure analogique filtré (Sₘ).

7. Circuit électronique (1) selon l'une des revendications 5 et 6, **caractérisé en ce que** le signal de mesure analogique filtré (Sₘ) est fourni directement à un multiplicateur analogique (5) de l'unité ratiométrique pour la fourniture d'un signal de sortie analogique de mesure dépendant du niveau de la tension d'alimentation du multiplicateur.

8. Circuit électronique (1) selon l'une des revendications précédentes, **caractérisé en ce qu'**il comprend un oscillateur (10) relié à l'unité de commande et de traitement des signaux numériques (9) pour permettre le cadencement des opérations traitées par l'unité de commande et de traitement des signaux numériques, ladite unité fournissant des données de configuration et commandant également les opérations des composants du circuit électronique sur la base d'un signal d'horloge fourni par l'oscillateur.

## Patentansprüche

1. Elektronische Schaltung (1) zum Messen eines physikalischen Parameters wie etwa einer Beschleunigung, einer Winkelgeschwindigkeit, einer Kraft oder eines Drucks, wobei die elektronische Schaltung umfasst:
- eine Sensorschnittstelle (2), die an ihrem Eingang mit einem externen Sensor (C) zum Messen des physikalischen Parameters verbunden ist und an ihrem Ausgang wenigstens ein analoges Messsignal (Vₘ) liefert, das den Wert des von dem Sensor gemessenen physikalischen Parameters repräsentiert,
- einen Analog/Digital-Umsetzer (8), um ein Signal (Vₘ, Sₘ) als Funktion des analogen Messsignals, das von der Sensorschnittstelle erzeugt wird, digital umzusetzen,
- eine Einheit zum Steuern und Verarbeiten digitaler Signale (9), um ein von dem Umsetzer umgesetztes Signal zu empfangen und um am Ausgang ein digitales Messsignal (S_{D}) zu liefern, das den Wert des von dem Sensor gemessenen physikalischen Parameters repräsentiert, und
- einen Spannungsregulierer (4), der über eine erste externe Gleichspannungsversorgungsquelle (Bat) versorgt werden kann, wobei der Regulierer die Sensorschnittstelle (2), den Umsetzer (8) und die Steuer- und Verarbeitungseinheit (9) mit einer regulierten Spannung (V_{reg}) versorgt, damit das analoge Messsignal der Schnittstelle und das digitale Messsignal von einer Änderung des Versorgungsspannungspegels (V_{CC}) der elektronischen Schaltung unabhängig sind,
**dadurch gekennzeichnet, dass** die elektronische Schaltung (1) eine Verhältnismesseinheit (5, 6) umfasst, die über die primäre externe Versorgungsspannungsquelle (Bat) oder durch eine zweite externe Versorgungsspannungsquelle (V_{EXT}) versorgt werden kann, um anhand des analogen Messsignals (Vₘ) oder des digitalen Messsignals (S_{D}) ein analoges Ausgangsmesssignal (S_{A}), das den Wert des gemessenen physikalischen Parameters repräsentiert und von der Veränderung des Versorgungsspannungspegels der ersten oder der zweiten externen Spannungsquelle abhängt, zu liefern.

2. Elektronische Schaltung (1) nach Anspruch 1, **dadurch gekennzeichnet, dass** die Verhältnismesseinheit einen analogen Multiplizierer (5) umfasst, um ein Signal, das eine Funktion des analogen Messsignals (Sₘ) ist und durch die Sensorschnittstelle erzeugt wird, mit dem Wert der Versorgungsspannung, die von der ersten oder der zweiten externen Spannungsquelle (V_{CC}, V_{EXT}) stammt und mit einem vorgegebenen konstanten Faktor gewichtet ist, zu multiplizieren, um ein analoges Messausgangssignal zu liefern, das von der Veränderung des Versorgungsspannungspegels des analogen Multiplizierers abhängt.

3. Elektronische Schaltung (1) nach Anspruch 1, **dadurch gekennzeichnet, dass** die Verhältnismesseinheit einen Digital/Analog-Umsetzer (6) umfasst, der über die erste externe Versorgungsspannungsquelle (Bat) oder die zweite externe Versorgungsspannungsquelle (V_{EXT}) versorgt werden kann und das digitale Messsignal (S_{D}) der Einheit zum Steuern und Verarbeiten der digitalen Signale (9) empfängt, um das analoge Messausgangssignal zu erzeugen, das von der Veränderung des Versorgungsspannungspegels des Digital/Analog-Umsetzers abhängt.

4. Elektronische Schaltung (1) nach einem der vorhergehenden Ansprüche, **dadurch gekennzeichnet, dass** sie eine Einheit (3) zum Verarbeiten analoger Signale umfasst, die zwischen die Sensorschnittstelle (2) und den Analog/Digital-Umsetzer (8) geschaltet ist, derart, dass wenigstens das analoge Messsignal, das durch die Sensorschnittstelle erzeugt wird, geformt wird.

5. Elektronische Schaltung (1) nach Anspruch 4, **dadurch gekennzeichnet, dass** die Einheit für die Verarbeitung analoger Signale wenigstens ein Tiefpassfilter umfasst, um ein gefiltertes analoges Messsignal (Sₘ) zu liefern.

6. Elektronische Schaltung (1) nach Anspruch 5, **dadurch gekennzeichnet, dass** die Einheit für die Verarbeitung analoger Signale ein erstes Tiefpassfilter, das direkt mit der Sensorschnittstelle verbunden ist, um wenigstens ein von der Sensorschnittstelle erzeugtes analoges Messsignal zu filtern, und ein zweites programmierbares Tiefpassfilter zweiter Ordnung, das mit dem Ausgang des ersten Tiefpassfilters verbunden ist, um wenigstens ein gefiltertes analoges Messsignal (Sₘ) zu erzeugen, umfasst.

7. Elektronische Schaltung (1) nach einem der Ansprüche 5 und 6, **dadurch gekennzeichnet, dass** das gefilterte analoge Messsignal (Sₘ) direkt zu einem analogen Multiplizierer (5) der Verhältnismesseinheit geliefert wird, um ein analoges Messausgangssignal, das von dem Versorgungsspannungspegel des Multiplizierers abhängt, zu liefern.

8. Elektronische Schaltung (1) nach einem der vorhergehenden Ansprüche, **dadurch gekennzeichnet, dass** sie einen Oszillator (10) umfasst, der mit der Einheit zum Steuern und Verarbeiten digitaler Signale (9) verbunden ist, um die Taktung der von der Einheit zum Steuern und Verarbeiten digitaler Signale ausgeführten Operationen zu ermöglichen, wobei die Einheit anhand eines von dem Oszillator gelieferten Taktsignals Konfigurationsdaten liefert und außerdem die Operationen der Komponenten der elektronischen Schaltung steuert.

## Claims

1. Electronic circuit (1) for measuring at least one physical parameter, such as an acceleration, angular velocity, force or pressure, the electronic circuit including:
- a sensor interface (2) connected at input to an external sensor (C) for measuring a physical parameter, and supplying at output at least one analogue measurement signal (Vₘ) representative of the value of the physical parameter measured by the sensor,
- an analogue-digital converter (8) for digitally converting a signal (Vₘ, Sₘ) as a function of the analogue measurement signal produced by the sensor interface,
- a digital signal control and processing unit (9) for receiving a signal converted by the converter, and supplying at output a digital measurement signal (S_{D}) representative of the value of the physical parameter measured by the sensor, and
- a voltage regulator (4) able to be powered via a first external continuous supply voltage source (Bat), the regulator supplying a regulated voltage (V_{reg}) to the sensor interface (2), the converter (8) and the control and processing unit (9) so that the analogue measurement signal from the interface and the digital measurement signal are independent of any variation in the level of the supply voltage (V_{CC}) of the electronic circuit,
**characterized in that** the electronic circuit (1) includes a ratiometric unit (5, 6) able to be powered via the first external supply voltage source (Bat) or by a second external supply voltage source (V_{EXT}), to supply an analogue output measurement signal (S_{A}) representative of the value of the measured physical parameter, on the basis of the analogue measurement signal (Vₘ) or the digital measurement signal (S_{D}), and dependent upon the variation in the level of the supply voltage from the first or second external voltage source.

2. Electronic circuit (1) according to claim 1, **characterized in that** the ratiometric unit includes an analogue multiplier (5) for multiplying a signal that is a function of the analogue measurement signal (Sₘ) produced by the sensor interface by the value of the supply voltage originating from the first or second external voltage source (V_{CC}, V_{EXT}) pondered by a predetermined constant factor, in order to supply an analogue output measurement signal dependent upon the variation in the level of the analogue multiplier supply voltage.

3. Electronic circuit (1) according to claim 1, **characterized in that** the ratiometric unit includes a digital-analogue converter (6) able to be powered via the first external supply voltage source (Bat) or the second external supply voltage source (V_{EXT}), and receiving the digital measurement signal (S_{D}) from the digital signal control and processing unit (9) to produce the analogue output measurement signal dependent upon the variation in the level of the digital-analogue converter supply voltage.

4. Electronic circuit (1) according to any of the preceding claims, **characterized in that** it includes an analogue signal processing unit (3) arranged between the sensor interface (2) and the analogue-digital converter (8) so as to shape at least the analogue measurement signal produced by the sensor interface.

5. Electronic circuit (1) according to claim 4, **characterized in that** the analogue signal processing unit includes at least one low pass filter for supplying a filtered analogue measurement signal (Sₘ).

6. Electronic circuit (1) according to claim 5, **characterized in that** the analogue signal processing unit includes a first low pass filter directly connected to the sensor interface to filter at least one analogue measurement signal produced by the sensor interface, and a second programmable second-order low-pass filter connected to the output of the first low pass filter to produce at least one filtered analogue measurement signal (Sₘ).

7. Electronic circuit (1) according to any of claims 5 and 6, **characterized in that** the filtered analogue measurement signal (Sₘ) is supplied directly to an analogue multiplier (5) of the ratiometric unit for supplying an analogue output measurement signal dependent upon the level of the multiplier supply voltage.

8. Electronic circuit (1) according to any of the preceding claims, **characterized in that** it includes an oscillator (10) connected to the digital signal control and processing unit (9) for clocking the operations processed by the digital signal control and processing unit, said unit supplying configuration data and also controlling the operations of the electronic circuit components on the basis of a clock signal supplied by the oscillator.
